(19) Europäisches Patentamt

European Patent Office

Office européen des brevets

(11) Veröffentlichungsnummer: **0 320 672**
**A2**

(12) **EUROPÄISCHE PATENTANMELDUNG**

(21) Anmeldenummer: 88119531.7

(51) Int. Cl.⁴: **G02F 1/133**

(22) Anmeldetag: 24.11.88

(30) Priorität: 16.12.87 DE 3742546

(43) Veröffentlichungstag der Anmeldung:
21.06.89 Patentblatt 89/25

(84) Benannte Vertragsstaaten:
**DE FR GB NL**

(71) Anmelder: **Nokia Graetz Gesellschaft mit beschränkter Haftung**
**Östliche-Karl-Friedrich-Strasse 132**
**D-7530 Pforzheim(DE)**

(72) Erfinder: **Stoitzner, Monika**
**Ottilie-Wildermuth-Strasse 7**
**D-7440 Nürtingen(DE)**
Erfinder: **Thaler, Helmut**
**Limburgstrasse 97**
**D-7319 Dettingen(DE)**

(54) Flüssigkristallzelle.

(57) Um das Aufbauchen einer Flüssigkristallzelle (5) beim Füllen mit der kristallinen Flüssigkeit (8) mit Hilfe eines Rezipienten (1) zu vermeiden, wird während des Füllvorganges eine Kraft auf die beiden Platten (6, 7) der Flüssigkristallzelle (5) ausgeübt. Dies kann beispielsweise derart erfolgen, daß auf der auf einer Platte (6) liegenden Flüssigkristallzelle (5) ein Gewicht (12) liegt.

EP 0 320 672 A2

## Flüssigkristallzelle

Die Erfindung bezieht sich auf ein Verfahren zum Füllen einer Flüssigkristallzelle gemäß dem Oberbegriff des Anspruchs 1.

Aus der Zeitschrift IBM Technical Disclosure Bulletin, Vol. 16, No. 2, July 1973, Seiten 395 und 396, ist eine Flüssigkristallzelle bekannt, die zwischen zwei Platten und einem Abstandsrahmen einen Flüssigkristall einschließt. Die Zelle hat in der einen Platte ein einziges Loch, durch das der Flüssigkristall eingebracht wird. Hierzu wird die Zelle senkrecht in ein Gefäß gestellt, in dem ein Becher mit dem Flüssigkristall vorhanden ist und das evakuiert wird. Dann wird die Zelle mit dem Loch in den Flüssigkristall getaucht und das Gefäß belüftet. Der Flüssigkristall wird durch den Luftdruck in die Zelle gedrückt. Danach wird das Loch hermetisch verschlossen. Dabei zeigt sich, daß die Zelle überfüllt ist, weil die Platten sich nach außen gebogen haben. Dies führt nicht nur zu einem Mehrverbrauch an Flüssigkristall, sondern die Zeitdauer der Füllung ist auch verlängert und kann von Zelle zu Zelle schwanken.

Der Erfindung liegt die Aufgabe zugrunde, ein Verfahren zum Füllen einer Flüssigkristallzelle anzugeben, bei dem die beschriebenen Nachteile nicht auftreten.

Die Lösung dieser Aufgabe erfolgt mit den im Anspruch 1 angegebenen Verfahrensschritten. Eine vorteilhafte Ausgestaltung der Erfindung ist im Anspruch 2 angegeben.

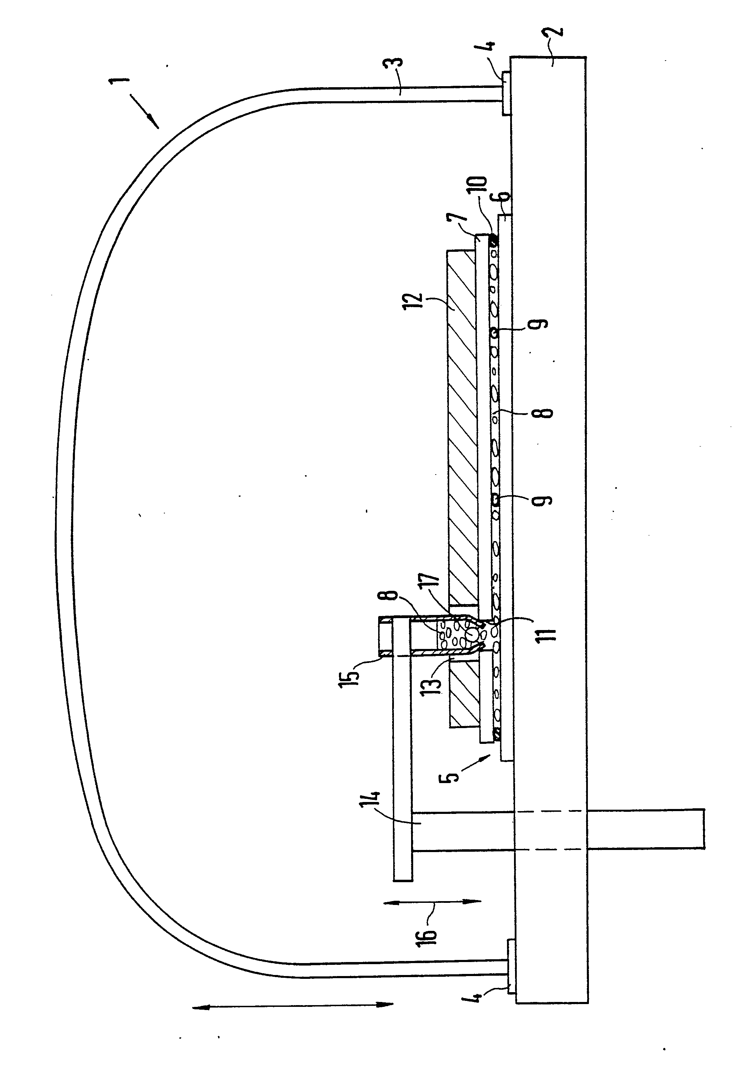

Die Erfindung wird nun anhand eines in der Zeichnung dargestellten Ausführungsbeispieles näher erläutert. Die einzige Figur zeigt eine Flüssigkristallzelle im Querschnitt in einem evakuierbaren Gefäß.

Das Gefäß 1 weist eine Grundplatte 2 und ein Oberteil 3 auf. Zwischen der Grundplatte 2 und dem Oberteil kann eine Dichtung 4 vorhanden sein. Das Gefäß 1 kann durch nicht dargestellte Mittel evakuiert und wieder belüftet werden. Derartige Gefäße werden auch als Rezipient bezeichnet.

Auf der Grundplatte 2 liegt eine Flüssigkristallzelle 5. Die Flüssigkristallzelle 5 besteht aus zwei an ihren Randzonen hermetisch miteinander verbundenen Platten 6, 7, zwischen denen Abstandshalter 9 und im fertigen Zustand eine kristalline Flüssigkeit 8 vorhanden sind. Die Verbindung der Platten kann beispielsweise durch einen geeigneten Kleber 10 erfolgen. Die weiteren üblichen Teile der Flüssigkristallzelle sind der besseren Übersicht wegen nicht dargestellt. Die Flüssigkristallzelle 5 liegt mit der Platte 6 auf der Grundplatte 2 und in der Platte 7 ist ein Einfülloch 11 vorhanden, das nach dem Füllvorgang verschlossen wird. Der Verschluß ist in der Figur nicht dargestellt und kann auf die übliche Art, beispielsweise durch einen Klebstofftropfen oder Glaslot usw., erfolgen.

Das Verfahren zum Füllen der Flüssigkristallzelle 5 ist nachstehend beschrieben:

Das Gefäß 1 ist belüftet und das Oberteil 3 entfernt. Auf die Grundplatte 2 wird die noch nicht gefüllte Flüssigkristallzelle 5 so gelegt, daß die Platte 7 mit dem Einfülloch 11 nach oben zeigt. Auf die Platte 7 wird ein Gewicht 12 gelegt, das fast die gesamte Platte 7 bedeckt. Dieses Gewicht 12 bewirkt, daß die Platten 6 und 7 parallel zueinander gehalten werden und sich nicht aufbauchen können. Im Bereich des Einfüllochs 11 weist das Gewicht eine Bohrung 13 auf.

Nach dem Aufsetzen des Oberteils 3 auf die Dichtung 4 wird das Gefäß 1 evakuiert. Ist ein ausreichendes Vakuum im Gefäß erreicht, dann wird durch einen nicht im einzelnen dargestellten Mechanismus 14 ein an seinem unteren Ende durch eine Kugel 17 verschlossenes Röhrchen 15 auf das Einfülloch 11 gesetzt. Die möglichen Bewegungsrichtungen des Mechanismus 14 sind durch einen Doppelpfeil 16 angedeutet. Im Röhrchen 15 befindet sich die kristalline Flüssigkeit 8, die an der beim Aufsetzen nach oben geschobenen Kugel 17 vorbei austreten kann. Wenn nun das Gefäß 1 wieder belüftet wird, dann drückt der Luftdruck die kristalline Flüssigkeit 8 in den von den Platten 6 und 7 umschlossenen Raum. Durch das Gewicht 12 tritt dabei keine Verformung der Platten 6, 7 auf, so daß nur so viel kristalline Flüssigkeit verbraucht wird, wie die Flüssigkristallzelle tatsächlich benötigt. Außerdem ist das Füllen der Flüssigkristallzelle zu einem genau bestimmbaren Zeitpunkt abgeschlossen, im Gegensatz zum vorn erwähnten Stand der Technik, bei dem ein mehr oder weniger starkes Aufbauchen der Platten auftreten kann.

Zum Schluß wird das Röhrchen 15, das Oberteil 3 und dann das Gewicht 12 entfernt und das Einfülloch 11 in üblicher Weise verschlossen.

## Ansprüche

1. Verfahren zum Füllen einer Flüssigkristallzelle, bei dem die Zelle in ein Gefäß eingebracht, das Gefäß evakuiert, die Zelle mit ihrem Einfülloch mit einer kristallinen Flüssigkeit in Berührung gebracht, das Gefäß belüftet und das Einfülloch nach dem Füllen der Zelle verschlossen wird, **dadurch gekennzeichnet,** daß auf die Zelle (5) während des Füllens eine die Platten (6, 7) in ihrer Lage haltende Kraft ausgeübt wird.

2. Verfahren nach Anspruch 1, dadurch gekennzeichnet, daß die Zelle (5) in dem Gefäß (1) auf die eine Platte (6) gelegt und auf die andere Platte (7) ein Gewicht (12) aufgelegt wird.